# EUROPÄISCHE PATENTSCHRIFT

(11) **EP 3 593 335 B1**
(45) Veröffentlichungstag und Bekanntmachung des Hinweises auf die Patenterteilung: **27.04.2022**
(21) Anmeldenummer: 18706503.2
(22) Anmeldetag: 21.02.2018
(51) Int. Cl.: G08C 17/02, A47L 7/00, B23Q 11/00, A47L 9/28

(54) **VERFAHREN ZUM BETRIEB EINES SYSTEMS UND ENTSPRECHENDES SYSTEM**
METHOD FOR OPERATING A SYSTEM AND CORRESPONDING SYSTEM
PROCÉDÉ POUR FAIRE FONCTIONNER UN SYSTÈME ET SYSTÈME CORRESPONDANT

(30) Priorität: 07.03.2017 DE 102017203685
(43) Veröffentlichungstag der Anmeldung: 15.01.2020
(73) Patentinhaber: Robert Bosch GmbH, 70442 Stuttgart (DE)
(72) Erfinder: SCHADOW, Joachim, 70563 Stuttgart (DE); STOCK, Joern, 70711 Leinfelden-Echterdingen (DE); ESENWEIN, Florian, 70771 Leinfelden-Echterdingen (DE)
(86) Internationale Anmeldenummer: PCT/EP2018/054216
(87) Internationale Veröffentlichungsnummer: WO 2018/162233

(56) Entgegenhaltungen:
- EP-A1- 2 940 975
- EP-A2- 2 628 427
- US-A1- 2014 378 056
- US-A1- 2015 093 973

## Beschreibung

### Stand der Technik

Es ist bereits ein Verfahren zu einem Betrieb eines Systems von einer Werkzeugmaschine und einem Werkzeugzubehörgerät, welche über eine Master/Slave-Konfiguration miteinander kommunizieren, vorgeschlagen worden, wobei die Kommunikationssignale über eine Energiezufuhr mittels eines elektrischen Kabels übertragen werden.

EP 2 628 427 A2 offenbart ein Verfahren nach dem Oberbegriff des Anspruchs 1.

### Offenbarung der Erfindung

Nach der Erfindung sind ein Verfahren gemäß Anspruch 1 und ein System gemäß Anspruch 8 vorgesehen.

Die Erfindung geht aus von einem Verfahren zu einem Betrieb eines Systems mit zumindest einem, insbesondere abnehmbar an einer Werkzeugmaschine anordenbaren, Werkzeugfunktionsmodul und mit zumindest einem Werkzeugzubehörgerät, wobei das Werkzeugfunktionsmodul und das Werkzeugzubehörgerät jeweils zumindest eine drahtlose Kommunikationseinheit umfassen.

Es wird vorgeschlagen, dass in zumindest einem Verfahrensschritt, in Abhängigkeit von einer Übertragung von elektronischen Daten mittels der drahtlosen Kommunikationseinheiten, dem Werkzeugfunktionsmodul eine Masterfunktion zugeordnet wird und dem zumindest einen Werkzeugzubehörgerät eine, der Masterfunktion untergeordnete, Slavefunktion zugeordnet wird. Dadurch kann vorteilhaft eine, hierarchisch gestaffelte, Kommunikation zwischen dem Werkzeugfunktionsmodul, insbesondere der mit dem Werkzeugfunktionsmodul versehenen Werkzeugmaschine, mit dem Werkzeugzubehörgerät auf einfache und benutzerfreundliche Weise ermöglicht werden. Zudem kann durch die drahtlose Kommunikation auf ein Kabel verzichtet werden, wodurch vorteilhaft eine aufwändige Kabelverlegung entfallen, sowie vorteilhaft eine potentielle Gefahrenstelle, beispielsweise durch ein Stolpern über das Kabel, entschärft werden kann. Außerdem wird vorteilhaft eine Zuordnung der Master- und/oder Slavefunktion zumindest einer Werkzeugmaschine und/oder zumindest eines Werkzeugzubehörgeräts, welches kabellos, beispielsweise mittels Energie aus einer elektrischen Batterie, betreibbar ist, ermöglicht.

Dadurch kann vorteilhaft eine Benutzerfreundlichkeit erhöht werden, beispielsweise indem mehrere kabellose Geräte gleichzeitig durch den selben Benutzer bedient werden können.

Unter einem "Werkzeugfunktionsmodul" soll insbesondere ein Modul verstanden werden, welches in Kombination mit einer Werkzeugmaschine und/oder einem Werkzeugzubehörgerät verwendet werden kann. Insbesondere ist das Werkzeugfunktionsmodul dazu vorgesehen zumindest einen Betriebsparameter einer Werkzeugmaschine und/oder eines Werkzeugzubehörgeräts auszulesen und/oder zu speichern und/oder kabellos, insbesondere an ein weiteres Werkzeugfunktionsmodul und/oder ein Auslesegerät und/oder eine weitere Werkzeugmaschine und/oder ein weiteres Werkzeugzubehörgerät zu übertragen. Vorzugsweise ist das Werkzeugfunktionsmodul von der Werkzeugmaschine und/oder dem Werkzeugzubehörgerät getrennt ausgebildet und insbesondere kraft- und/oder formschlüssig mit der Werkzeugmaschine und/oder dem Werkzeugzubehörgerät verbindbar. Es ist jedoch insbesondere auch vorstellbar, dass das Werkzeugfunktionsmodul in der Werkzeugmaschine und/oder in dem Werkzeugzubehörgerät fest verbaut ist und/oder, dass das Werkzeugfunktionsmodul zumindest teilweise einstückig mit der Werkzeugmaschine und/oder dem Werkzeugzubehörgerät ausgebildet ist. Insbesondere umfasst das Werkzeugfunktionsmodul zumindest eine Ausleseeinheit und/oder zumindest eine, insbesondere kabellose, Sendeeinheit und/oder zumindest eine, insbesondere kabellose Empfangseinheit und/oder zumindest eine Speichereinheit zur Speicherung zumindest eines Betriebsparameters und/oder zumindest eine Recheneinheit zur Verarbeitung von Daten und/oder zumindest eine Erfassungseinheit. Unter einer "Erfassungseinheit" soll insbesondere eine Einheit verstanden werden, welche insbesondere dazu vorgesehen ist zumindest eine Betriebskenngröße, wie beispielsweise einen An/Aus-Status, eine Drehzahl, eine Leistung, eine Lautstärke, eine Geschwindigkeit, und/oder eine Betriebsart, wie beispielsweise ein Leer- und/oder Lastlauf und/oder eine andere dem Fachmann sinnvoll erscheinende Messgröße, zu erfassen. Zudem ist die Erfassungseinheit vorzugsweise dazu vorgesehen eine Lage im Raum, eine Orientierung im Raum und/oder eine Umweltvariable wie beispielsweise Luftdruck, Temperatur, Luftqualität, Feuchtigkeit, Helligkeit, Sichtweite zu registrieren und/oder zu messen. Insbesondere kann die Erfassungseinheit zumindest einen Sensor für zumindest eine physikalische Größe und/oder zumindest eine Kamera und/oder zumindest ein Mikrofon umfassen. Zudem ist vorstellbar, dass die Erfassungseinheit ein Empfangsmodul für Daten weiterer externer Sensoren, wie beispielsweise einer Überwachungskamera, einer Wetterstation und/oder einer Lichtschranke umfasst. Das Werkzeugfunktionsmodul ist insbesondere als ein sogenanntes "Maintenance Tag" oder "Sensor Tag" ausgebildet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Unter einer "Werkzeugmaschine" soll insbesondere eine mechanisierte Fertigungseinrichtung, welche durch relative Bewegung zwischen Werkstück und Werkzeug eine vorgegebene Form am Werkstück oder eine Veränderung einer vorgegebenen Form an einem Werkstück erzeugt, vorteilhaft jedoch eine Bohrmaschine, ein Bohr- und/oder Schlaghammer, eine Hobelmaschine, eine Drehmaschine, eine Poliermaschine, eine Säge, ein Hobel, ein Schrauber, eine Fräse, ein Schleifer, ein Winkelschleifer, ein Gartengerät und/oder ein Multifunktionswerkzeug verstanden werden. Die Werkzeugmaschine ist insbesondere mobil oder stationär ausgebildet.

Unter einem "Werkzeugzubehörgerät" soll insbesondere ein Gerät verstanden werden, welches im Zusammenhang mit dem Betrieb einer Werkzeugmaschine eine Funktion ausführen kann, welche beispielsweise vorteilhaft einen auf einen Arbeitsvorgang positiven Effekt haben kann, wie beispielsweise eine Reinigung einer Arbeitsfläche, und/oder eine auf den Arbeitsvorgang abgestimmte Anpassung eines Betriebsparameters, beispielsweise eine Leistungsänderung, bewirken kann. Ein Werkzeugzubehörgerät kann insbesondere als ein Staubsauger, eine Beleuchtungseinheit, ein Baustellenradio, ein Gebläse, ein Wiedergabegerät für ein akustisches und/oder visuelles Signal, ein Verriegelungsmechanismus und/oder ein anderes dem Fachmann im Zusammenhang mit dem Betrieb einer Werkzeugmaschine als sinnvollerweise steuerbar erscheinendes Gerät ausgebildet sein.

Unter einer "drahtlosen Kommunikationseinheit" soll insbesondere eine Einheit verstanden werden, welche dazu vorgesehen ist, insbesondere digitale, Daten zu senden und/oder zu empfangen, wobei vorzugsweise gerichtete oder ungerichtete elektromagnetische Wellen im freien Raum zur Informationsübertragung dienen. Es ist insbesondere vorstellbar, dass die Datenübertragung der drahtlosen Kommunikationseinheit mittels zumindest einem Industriestandard wie beispielsweise Bluetooth, Bluetooth smart, ZigBee, ANT, ANT+, NFC, WLAN, Wibree, Z-Wave und/oder Enocean bewerkstelligt wird.

Unter einer "Masterfunktion" soll insbesondere eine Funktion in einem Netzwerk, insbesondere einem, vorzugsweise digitalen, Kommunikationsnetzwerk, verstanden werden, die dazu vorgesehen ist einem Teilnehmer des Netzwerks eine hierarchische Kontrolle über andere Netzwerkteilnehmer zu gewähren. Insbesondere kann der Masterfunktion zudem vorteilhaft ein Betriebsmodus zugeordnet sein, bei dessen Aktivierung elektronische Daten an alle anderen Netzwerkteilnehmer übermittelt werden, was insbesondere dazu vorgesehen sein kann einen Betriebsmodus und/oder eine Betriebskenngröße der anderen Netzwerkteilnehmer zu aktivieren und/oder zu deaktivieren und/oder zu variieren.

Unter einer "Slavefunktion" soll insbesondere eine Funktion in einem Netzwerk, insbesondere einem, vorzugsweise digitalen, Kommunikationsnetzwerk, verstanden werden, die dazu vorgesehen ist einem Teilnehmer des Netzwerks eine hierarchisch der Masterfunktion untergeordnete Stellung zuzuweisen. Insbesondere muss ein Netzwerkteilnehmer mit einer Slavefunktion Vorgaben und/oder Aufgaben und/oder Befehle eines Netzwerkteilnehmers mit Masterfunktion ausführen. Insbesondere kann der Slavefunktion zudem vorteilhaft ein Betriebsmodus und/oder eine Betriebskenngröße zugeordnet sein, die bei einem Empfang einer entsprechenden Vorgabe von einem Netzwerkteilnehmer mit Masterfunktion aktiviert und/oder deaktiviert und/oder variiert wird.

Unter einer "Zuordnung in Abhängigkeit von einer Übertragung von elektronischen Daten" soll insbesondere verstanden werden, dass eine Master- und eine Slavefunktion nur zugewiesen werden, wenn eine Datenverbindung zwischen den beteiligten Geräten besteht. Insbesondere soll auch bei einer Werkzeugmaschine und/oder einem Werkzeugfunktionsmodul, welches ausschließlich als Master agieren kann, eine Zuordnung einer Funktion, insbesondere einer Masterfunktion, erst nach einer Verbindung mittels zumindest eines weiteren Netzwerkteilnehmers erfolgen. Insbesondere kann keinem Netzwerkteilnehmer eine Masterfunktion zugewiesen werden, ohne dass einem anderen Netzwerkteilnehmer eine Slavefunktion zugewiesen wird. Insbesondere wird bei einer Zuweisung einer Masterfunktion zu einem Netzwerkteilnehmer automatisch allen anderen Netzwerkteilnehmern eine Slavefunktion zugewiesen. Unter einem "Netzwerkteilnehmer" soll insbesondere eine Werkzeugmaschine und/oder ein Werkzeugfunktionsmodul und/oder ein Werkzeugzubehörgerät verstanden werden, welches insbesondere drahtlos mit einer weiteren Werkzeugmaschine und/oder einem weiteren Werkzeugfunktionsmodul und/oder einem weiteren Werkzeugzubehörgerät in Verbindung steht.

Zudem wird vorgeschlagen, dass in zumindest einem Verfahrensschritt mittels zumindest einer Erfassungseinheit des Werkzeugfunktionsmoduls zumindest eine Betriebskenngröße, insbesondere zumindest eine Betriebskenngröße einer Werkzeugmaschine, an der das Werkzeugfunktionsmodul angeordnet ist, erfasst wird und infolge der Slavefunktion des zumindest einen Werkzeugzubehörgeräts, das zumindest eine Werkzeugzubehörgerät in Abhängigkeit von der zumindest einen Betriebskenngröße angesteuert wird. Unter dem Begriff "angesteuert" soll insbesondere verstanden werden, dass zumindest eine Betriebskenngröße des Geräts, welchem die Slavefunktion zugewiesen ist, verändert, vorzugsweise erhöht oder vermindert wird und/oder dass ein Betrieb des Geräts, welchem die Slavefunktion zugewiesen ist aktiviert und/oder deaktiviert wird. Beispielsweise ist es vorstellbar, dass bei einer Aktivierung eines Betriebs einer stauberzeugenden Werkzeugmaschine, z. B. einer Bohrmaschine, einem Bohrhammer, einer Säge, eines Schleifers, eines Meißels, eine Saug- und/oder Blasfunktion eines Staubsaugers aktiviert wird und/oder je nach Leistung der Werkzeugmaschine die Leistung des Staubsaugers angepasst wird. Dabei ist vorstellbar, dass das Werkzeugzubehörgerät, insbesondere der Staubsauger, zusätzlich mittels eines Funktionselements, beispielsweise einem Absaugschlauch, mit der Werkzeugmaschine verbunden ist. Als weiteres Beispiel ist zudem vorstellbar, dass bei einer Aktivierung einer Werkzeugmaschine ein Baustellenradio, welchem eine Slavefunktion zugewiesen ist, abgestellt wird oder alternativ dessen Lautstärke erhöht wird und/oder, dass eine Baustellenbeleuchtung und/oder -warnleuchte, welcher eine Slavefunktion zugewiesen ist, angeschaltet und/oder aufgehellt wird. Zudem ist vorstellbar, dass bei einer Ansteuerung, insbesondere in Abhängigkeit der erfassten Betriebskenngröße unterschiedliche Funktionen des zu aktivierenden Werkzeugzubehörgeräts, dem die Slavefunktion zugewiesen ist, angesteuert werden. Beispielsweise kann eine Baustellenwarnleuchte unterschiedliche Warnsignale anzeigen. Durch eine derartige Ausgestaltung kann vorteilhaft ein Komfort erhöht werden, insbesondere indem, angepasst an eine spezielle Situation, ein Werkzeugzubehörgerät eine passende, vorteilhaft einen Arbeitsschritt erleichternde, Funktion ausführt. Zudem kann, insbesondere durch eine auf einen Betriebsparameter abgestimmte Reaktion des Werkzeugzubehörgeräts, vorteilhaft eine Flexibilität des Systems erhöht werden.

Weiterhin wird nach der Erfindung vorgeschlagen, dass in zumindest einem Verfahrensschritt eine Zuordnung der Masterfunktion und/oder der Slavefunktion mittels einer Benutzerschnittstelle vorgenommen wird. Unter einer "Zuordnung einer Master- oder Slavefunktion" soll insbesondere ein Zuteilen der Masterfunktion auf eine Werkzeugmaschine und/oder ein Werkzeugzubehörgerät und ein, vorzugsweise automatisches, Zuteilen der Slavefunktion auf jede weitere verbundene Werkzeugmaschine und/oder jedes weitere verbundene Werkzeugzubehörgerät verstanden werden. Dadurch kann vorteilhaft eine Benutzerfreundlichkeit erhöht werden, insbesondere da, je nach Benutzerwunsch eine Master- / Slavezuteilung vorgenommen und/oder geändert werden kann. Zudem ist es vorstellbar, dass bei einem Zuordnen der Masterfunktion zumindest eine Funktion der Werkzeugmaschine und/oder des Werkzeugzubehörgeräts, welche eine Aktivierung zumindest einer Funktion zumindest einer Werkzeugmaschine und/oder zumindest eines Werkzeugzubehörgeräts, welchem eine Slavefunktion zugewiesen ist, auslöst, ausgewählt werden kann. Außerdem ist es vorstellbar, dass bei einem Zuordnen der Masterfunktion zumindest eine Funktion der Werkzeugmaschine und/oder des Werkzeugzubehörgeräts welche bei einer Aktivierung zumindest einer Funktion zumindest einer Werkzeugmaschine und/oder zumindest eines Werkzeugzubehörgeräts, welchem die Masterfunktion zugewiesen ist, ausgelöst wird, ausgewählt werden kann. Dadurch kann vorteilhaft eine Flexibilität erhöht werden, insbesondere indem vorteilhaft eine Mehrzahl möglicher Funktionskombinationen, welche über die Master- / Slaveanordnung ansteuerbar sind verfügbar gemacht werden. Unter einer "Benutzerschnittstelle" soll hierbei insbesondere eine Schnittstelle verstanden werden, welche einen aktiven, vorzugsweise manuellen Zugriff, insbesondere auf die Master/Slave Verbindung und/oder die Steuerung und/oder Aktivierung und/oder Deaktivierung der Werkzeugmaschine und/oder des Werkzeugzubehörgeräts erlaubt. Dadurch kann vorteilhaft eine Änderung der Zuteilung der Masterfunktion innerhalb eines Netzwerks erfolgen. Außerdem kann vorteilhaft eine Fernsteuerung zumindest einer Werkzeugmaschine und/oder zumindest eines Werkzeugzubehörgeräts ermöglicht werden. Eine Benutzerschnittstelle kann insbesondere als ein Smartphone, insbesondere als eine Smartphone App und/oder als ein Tablet und/oder als ein Notebook und/oder als zumindest ein Schalter und/oder als zumindest eine Bedieneinheit, insbesondere einer Werkzeugmaschine und/oder eines Werkzeugzubehörgeräts und/oder eines Werkzeugfunktionsmoduls ausgebildet sein. Dadurch kann vorteilhaft eine einfache, intuitive Bedienoberfläche bereitgestellt werden, wodurch insbesondere ein Bedienerkomfort erhöht werden kann.

Außerdem wird vorgeschlagen, dass in zumindest einem Verfahrensschritt mittels zumindest einer Erfassungseinheit des Werkzeugfunktionsmoduls eine Annäherungskenngröße des Werkzeugfunktionsmoduls an das zumindest eine Werkzeugzubehörgerät und/oder die zumindest eine Werkzeugmaschine erfasst wird. Unter einer "Annäherungskenngröße" soll insbesondere eine Kenngröße verstanden werden, welche bei einer Abstandsänderung des Werkzeugfunktionsmoduls von einem Werkzeugzubehörgerät und/oder einer Werkzeugmaschine, insbesondere proportional und/oder quadratisch und/oder exponentiell und/oder kubisch und/oder logarithmisch und/oder wurzelförmig, wächst oder sinkt. Insbesondere kann eine Annäherungskenngröße beispielsweise als eine Signalstärke, insbesondere ein RSSI Wert und/oder als eine Laufzeit und/oder als eine Winkelgröße, insbesondere einer Triangulation, ausgebildet sein. Dadurch kann vorteilhaft auf einfache Weise eine, insbesondere relative, Bewegung eines Geräts gegenüber der Lage des Werkzeugfunktionsmoduls erfasst werden. Es ist vorstellbar, dass die Annäherungskenngröße in zumindest einem Verfahrensschritt dazu verwendet wird eine, insbesondere automatische, Verbindung des Werkzeugfunktionsmoduls mit zumindest einer Werkzeugmaschine und/oder mit zumindest einem Werkzeugzubehörgerät herzustellen. Dabei wird bei einer Über- und/oder Unterschreitung eines Grenzwerts der Annäherungskenngröße eine drahtlose Verbindung zum Austausch von Daten zwischen dem Werkzeugfunktionsmodul und einer Werkzeugmaschine und/oder einem Werkzeugzubehörgerät aufgebaut. Es ist zudem vorstellbar, dass das Werkzeugfunktionsmodul einen Schalter aufweist, mittels dessen Betätigung eine Verbindung mit einem, sich in unmittelbarer Nähe des Werkzeugfunktionsmoduls befindlichen, Werkzeugzubehörgerät autorisiert wird. Außerdem ist vorstellbar, dass das zu verbindende Gerät einen Schalter aufweist und eine Verbindung zwischen Werkzeugfunktionsmodul und dem zu verbindenden Gerät, nach einem Drücken des Schalters des zu verbindenden Geräts und des Schalters des Werkzeugfunktionsmoduls innerhalb einer vorgegebenen Zeit, aktiviert wird. Die vorgegebene Zeit beträgt insbesondere 0,5 s, vorzugsweise 1 s, bevorzugt 2 s oder besonders bevorzugt 10 s. Vorzugsweise wird zur Herstellung einer Verbindung das Werkzeugfunktionsmodul in die Nähe eines zu verbindenden Geräts gebracht, beispielsweise durch kurzes antippen und/oder auflegen, wodurch das Werkzeugfunktionsmodul automatisch oder nach einem zusätzlichen Autorisationsschritt eine Verbindung herstellt. Unter einer "Nähe" soll insbesondere ein Abstand des Werkzeugfunktionsmoduls von dem zu verbindenden Gerät von maximal 2 cm, vorzugsweise maximal 4 cm oder bevorzugt maximal 6 cm verstanden werden. Dadurch kann vorteilhaft ein einfacher, intuitiver Verbindungsaufbau, insbesondere zwischen dem Werkzeugfunktionsmodul und einer Werkzeugmaschine und/oder einem Werkzeugzubehörgerät, ermöglicht werden, wodurch vorteilhaft eine Benutzerfreundlichkeit erhöht werden kann.

Wenn in zumindest einem Verfahrensschritt die zumindest eine erfasste Annäherungskenngröße mittels einer Recheneinheit ausgewertet wird und zu einer Zuordnung der Masterfunktion und/oder der Slavefunktion ausgewertet wird, kann vorteilhaft eine einfache Zuordnung der Masterfunktion und/oder der Slavefunktion ermöglicht werden. Dadurch kann vorteilhaft eine Benutzerfreundlichkeit erhöht werden. Unter einer "Recheneinheit" soll insbesondere eine Einheit verstanden werden, die dazu vorgesehen ist mittels programmierbarer Rechenvorschriften Daten zu verarbeiten. Es ist vorstellbar, dass das Werkzeugfunktionsmodul eine Recheneinheit aufweist. Alternativ ist vorstellbar, dass die Recheneinheit eine Recheneinheit einer Benutzerschnittstelle und/oder einer Werkzeugmaschine und/oder eines Werkzeugzubehörgeräts ist, welche insbesondere Daten verarbeitet, welche mittels der Kommunikationseinheiten des Werkzeugfunktionsmoduls und der damit zu verbindenden Geräte ausgetauscht werden. Dadurch kann vorteilhaft eine Komplexität gering gehalten werden, indem bereits vorhandene Rechenkapazitäten für zusätzliche Funktionen genutzt werden. Vorteilhaft lassen sich dadurch Produktionskosten des Werkzeugfunktionsmoduls gering halten.

Zudem wird vorgeschlagen, dass in zumindest einem Verfahrensschritt mittels zumindest einer Erfassungseinheit des Werkzeugfunktionsmoduls zumindest eine Lage, insbesondere eine Lageänderung und/oder zumindest eine Orientierung, insbesondere eine Orientierungsänderung des Werkzeugfunktionsmoduls, insbesondere in einem an einer Werkzeugmaschine angeordneten Zustand des Werkzeugfunktionsmoduls, erfasst wird. Es ist vorstellbar, dass die Lage des Werkzeugfunktionsmoduls mittels eines Lageerkennungsmoduls der Erfassungseinheit bestimmt wird. Das Lageerkennungsmodul kann insbesondere als ein GPS-, Galileo-, Beidou- und/oder GLONASS-Sensor ausgebildet sein. Es ist zudem vorstellbar, dass die Orientierung, insbesondere eine Orientierungsänderung des Werkzeugfunktionsmoduls mittels eines Orientierungserkennungsmoduls der Erfassungseinheit bestimmt wird. Das Orientierungserkennungsmodul kann insbesondere als ein Beschleunigungssensor ausgebildet sein. Dadurch kann vorteilhaft eine Lage und/oder Orientierungsinformation als Betriebsparameter verwendet werden, wodurch eine Flexibilität erhöht werden kann.

Ferner wird vorgeschlagen, dass in zumindest einem Verfahrensschritt die erfasste Lage und/oder Orientierung des Werkzeugfunktionsmoduls mittels zumindest einer Recheneinheit zu einer Steuerung und/oder Regelung von zumindest einer Funktion des zumindest einen Werkzeugzubehörgeräts, dem eine Slavefunktion zugewiesen ist, ausgewertet wird. Dadurch kann vorteilhaft eine Lage und/oder Orientierungsinformation als Betriebsparameter verwendet werden, wodurch eine Flexibilität erhöht werden kann. Zudem ist vorstellbar, dass die Lage und/oder Orientierungsinformationen in zumindest einem Verfahrensschritt zu einer Fernsteuerung eines Werkzeugzubehörgeräts verwendet werden. Beispielsweise kann ein selbstfahrender Rasenmäher mittels Bewegungen des Werkzeugfunktionsmoduls ferngesteuert werden. Durch die zusätzliche Fernsteuerfunktion kann vorteilhaft ein Einsatzgebiet vergrößert und eine Flexibilität erhöht werden.

Außerdem wird vorgeschlagen, dass in zumindest einem Verfahrensschritt eine in Abhängigkeit von zumindest einer erfassten Betriebskenngröße aktivierte Funktion des zumindest einen Werkzeugzubehörgeräts, dem eine Slavefunktion zugewiesen ist, in Abhängigkeit von einer erfassten Kenngröße, die verschieden ist von der Betriebskenngröße, angepasst wird. Dadurch kann vorteilhaft eine verbesserte Abstimmung der jeweiligen Funktionen an einen Arbeitsvorgang erreicht werden, wodurch vorteilhaft eine Benutzerfreundlichkeit gesteigert werden kann. Kenngrößen, die verschieden sind von der Betriebskenngröße umfassen beispielsweise durch eine Kamera aufgenommene optische Signale, Umweltdaten wie Luftdruck, Feuchtigkeit o.ä. und/oder Signale eines Bewegungsmelders. Beispielsweise ist vorstellbar, dass mittels einer Kamera ein Zustand automatisch erkannt wird, welcher eine Änderung und/oder Anpassung einer Funktion, welche von einem Werkzeugzubehörgerät ausgeführt wird zur Folge haben kann. Beispielsweise kann eine Kamera bei einem Saugvorgang erkennen, dass eine Saugleistung nicht ausreicht, beispielsweise indem nicht alles Sauggut aufgesaugt wird, und in der Folge die Saugleistung erhöhen.

Zudem geht die Erfindung aus von einem System, zur Durchführung eines solchen Verfahrens.

Es wird vorgeschlagen, dass in Abhängigkeit von einer Übertragung von elektronischen Daten mittels der drahtlosen Kommunikationseinheiten, dem Werkzeugfunktionsmodul eine Masterfunktion zuordenbar ist und dem zumindest einen Werkzeugzubehörgerät eine, insbesondere der Masterfunktion untergeordnete, Slavefunktion zuordenbar ist.

Zudem wird vorgeschlagen, dass das Werkzeugfunktionsmodul zumindest eine Erfassungseinheit mit einem Beschleunigungssensor umfasst. Dadurch kann vorteilhaft eine Orientierung, insbesondere eine Änderung der Orientierung des Werkzeugfunktionsmoduls als Betriebsparameter bereitgestellt werden, wodurch vorteilhaft neue Einsatzmöglichkeiten erschlossen werden können.

Das erfindungsgemäße Verfahren und/oder das erfindungsgemäße System sollen hierbei nicht auf die oben beschriebene Anwendung und Ausführungsform beschränkt sein. Insbesondere können das erfindungsgemäße Verfahren und/oder das erfindungsgemäße System zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ablaufdiagramm eines erfindungsgemäßen Verfahrens zum Betrieb eines Systems,
- Fig. 2: das System zur Durchführung des Verfahrens in einer schematischen Darstellung,
- Fig. 3: eine Werkzeugmaschine des Systems mit einem Werkzeugfunktionsmodul des Systems in einer schematischen Darstellung und
- Fig. 4: ein Werkzeugzubehörgerät des Systems in einer schematischen Darstellung.

### Beschreibung des Ausführungsbeispiels

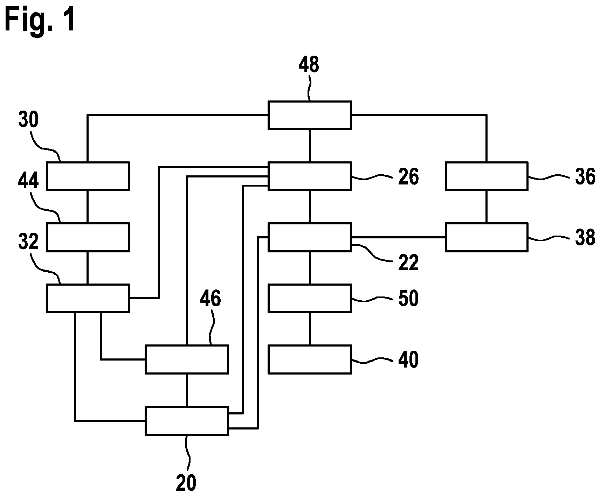

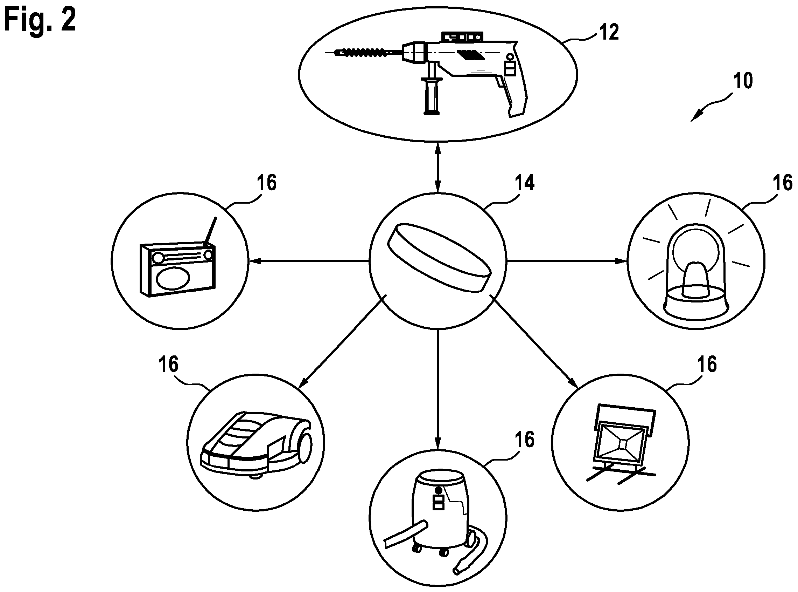

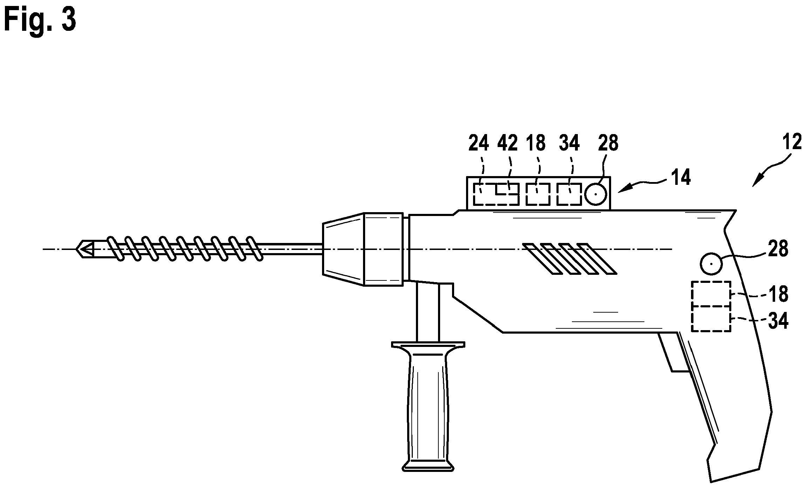

In Fig. 1 ist ein Ablaufdiagramm eines Verfahrens zum Betrieb eines Systems 10 dargestellt. Das System 10 zur Durchführung des Verfahrens ist in Fig. 2 gezeigt und umfasst zumindest eine Werkzeugmaschine 12, zumindest ein Werkzeugfunktionsmodul 14 und zumindest ein Werkzeugzubehörgerät 16. Das Werkzeugfunktionsmodul 14 ist an der Werkzeugmaschine 12 angeordnet (vgl. Fig. 3). Das Werkzeugfunktionsmodul 14 ist lösbar mit der Werkzeugmaschine 12 verbunden. Alternativ kann das Werkzeugfunktionsmodul 14 auch ein fest verbautes Teil der Werkzeugmaschine 12 sein. Das System 10 umfasst genau eine Werkzeugmaschine 12 und genau ein Werkzeugfunktionsmodul 14. Es ist jedoch auch denkbar, dass das System 10 mehrere Werkzeugmaschinen 12 und/oder mehrere Werkzeugfunktionsmodule 14 umfasst. Das System 10 umfasst eine Vielzahl von Werkzeugzubehörgeräten 16. Es ist jedoch auch denkbar, dass das System 10 nur ein einziges Werkzeugzubehörgerät 16 umfasst. Die Werkzeugmaschine 12 ist als tragbare Werkzeugmaschine ausgebildet. Die Werkzeugmaschine 12 ist als Bohrhammer ausgebildet (vgl. Fig. 3). Es sind jedoch auch andere, einem Fachmann als sinnvoll erscheinende Ausgestaltungen der Werkzeugmaschine 12 denkbar. Die Werkzeugmaschine 12 des Systems 10 ist austauschbar ausgebildet. Der Benutzer kann in Abhängigkeit einer Anwendung die als Bohrhammer ausgebildete Werkzeugmaschine 12 durch eine alternativ, beispielsweise als Schleifer, ausgestaltete Werkzeugmaschine 12 austauschen. Die Werkzeugmaschine 12 umfasst eine Kommunikationseinheit 18 zu einer Kommunikation zumindest mit jeweils einer Kommunikationseinheit 18 des Werkzeugfunktionsmoduls 14 und/oder des Werkzeugzubehörgeräts 16 zur Übertragung elektronischer Daten in einem verbundenen Zustand. Die Kommunikationseinheit 18 ist zu einer drahtlosen Kommunikation vorgesehen. Die Werkzeugmaschine 12 umfasst zumindest eine Recheneinheit 34. Die Recheneinheit 34 ist zumindest dazu vorgesehen ein durch die Kommunikationseinheit 18 empfangenes Datensignal elektronisch zu bearbeiten. Die Werkzeugmaschine 12 umfasst eine Benutzerschnittstelle 28. Die Benutzerschnittstelle 28 ist als ein Schalter ausgebildet. Alternativ kann die Benutzerschnittstelle 28 getrennt von der Werkzeugmaschine 12 ausgebildet sein, beispielsweise als ein Smartphone. Die Werkzeugmaschine 12 ist kabellos ausgebildet. Die Werkzeugmaschine 12 wird mittels einer Batterie mit Energie versorgt.

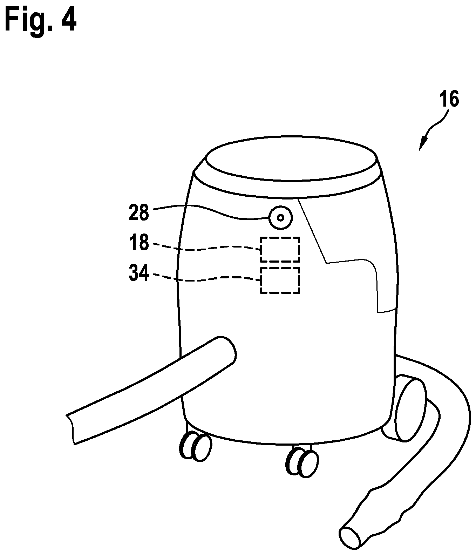

Die Werkzeugzubehörgeräte 16 sind als Radio, Rasenmäher, Staubsauger, Baustellenbeleuchtung und Baustellenwarnlampe ausgebildet. Es sind, alternativ oder zusätzlich, jedoch auch andere, einem Fachmann als sinnvoll erscheinende Ausgestaltungen der Werkzeugzubehörgeräte 16 denkbar. Das beispielhaft in Figur 4 dargestellte Werkzeugzubehörgerät 16 ist als Staubsauger ausgebildet. Die Werkzeugzubehörgeräte 16 umfassen jeweils eine Kommunikationseinheit 18 zu einer Kommunikation zumindest mit jeweils einer Kommunikationseinheit 18 der Werkzeugmaschine 12 und/oder des Werkzeugfunktionsmoduls 14 zur Übertragung elektronischer Daten in einem verbundenen Zustand. Die Kommunikationseinheiten 18 sind zu einer drahtlosen Kommunikation vorgesehen. Die Werkzeugzubehörgeräte 16 umfassen jeweils zumindest eine Recheneinheit 34. Die Recheneinheiten 34 sind zumindest dazu vorgesehen ein durch die Kommunikationseinheiten 18 empfangenes Datensignal elektronisch zu bearbeiten. Die Werkzeugzubehörgeräte 16 umfassen jeweils eine Benutzerschnittstelle 28. Die Benutzerschnittstellen 28 sind als Schalter ausgebildet. Alternativ können die Benutzerschnittstellen 28 getrennt von den Werkzeugzubehörgeräten 16 ausgebildet sein. Eine getrennt von den Werkzeugzubehörgeräten 16 ausgebildete Benutzerschnittstelle 28 kann gleichzeitig als eine Benutzerschnittstelle 28 für eine Mehrzahl an Werkzeugzubehörgeräten 16 und/oder Werkzeugmaschinen 12 und/oder Werkzeugfunktionsmodulen 14 und/oder einer Kombination der Vorgenannten dienen. Zumindest ein Werkzeugzubehörgerät 16 ist kabellos ausgebildet. Das zumindest eine Werkzeugzubehörgerät 16 wird mittels einer Batterie mit Energie versorgt.

Das Werkzeugfunktionsmodul 14 ist als ein Maintenance Tag ausgebildet. Es sind, alternativ oder zusätzlich, jedoch auch andere, einem Fachmann als sinnvoll erscheinende Ausgestaltungen des Werkzeugfunktionsmoduls 14 denkbar. Das Werkzeugfunktionsmodul 14 umfasst eine Kommunikationseinheit 18 zu einer Kommunikation zumindest mit jeweils einer Kommunikationseinheit 18 der Werkzeugmaschine 12 und/oder des Werkzeugzubehörgeräts 16 zur Übertragung elektronischer Daten in einem verbundenen Zustand. Die Kommunikationseinheit 18 ist zu einer drahtlosen Kommunikation vorgesehen. Das Werkzeugfunktionsmodul 14 umfasst zumindest eine Recheneinheit 34. Alternativ kann das Werkzeugfunktionsmodul 14 auch ohne eigene Recheneinheit 34 ausgebildet sein und mittels drahtloser Kommunikation auf eine externe Rechenressource zugreifen. Das Werkzeugfunktionsmodul 14 umfasst eine Benutzerschnittstelle 28. Die Benutzerschnittstelle 28 ist als ein Schalter ausgebildet. Alternativ kann die Benutzerschnittstelle 28 getrennt von dem Werkzeugfunktionsmodul 14 ausgebildet sein. Das Werkzeugfunktionsmodul 14 umfasst eine Erfassungseinheit 24. Die Erfassungseinheit 24 umfasst zumindest ein Sensorelement. Das Sensorelement ist als Beschleunigungssensor 42 ausgebildet. Alternativ kann die Erfassungseinheit 24 eine Mehrzahl an Sensorelementen umfassen, welche insbesondere verschieden von dem Beschleunigungssensor 42 sind. Das Werkzeugfunktionsmodul 14 ist kabellos ausgebildet. Das Werkzeugfunktionsmodul 14 wird mittels einer Batterie mit Energie versorgt. Alternativ ist vorstellbar, dass das Werkzeugfunktionsmodul 14 von der Werkzeugmaschine 12 mit Energie versorgt wird.

Die Werkzeugmaschine 12, das Werkzeugfunktionsmodul 14 und die Werkzeugzubehörgeräte 16 des Systems 10 sind miteinander verbindbar. Eine Verbindung zwischen der Werkzeugmaschine 12 und den Werkzeugfunktionsmodulen 14 ist zu einer ferngesteuerten Aktivierung, Deaktivierung und/oder Beeinflussung zumindest eines Betriebsparameters mittels einem drahtlosen Austausch elektronischer Daten vorgesehen. Das Verfahren zum Betrieb des Systems 10 ist im Folgenden näher beschrieben.

Das Verfahren (Fig. 1) umfasst zumindest einen Verfahrensschritt 48, in dem zumindest eine Werkzeugmaschine 12 und zumindest ein Werkzeugfunktionsmodul 14 und zumindest ein Werkzeugzubehörgerät 16 mit Energie versorgt werden.

Das Verfahren umfasst zumindest einen Verfahrensschritt 30, in dem mittels der Erfassungseinheit 24 des Werkzeugfunktionsmoduls 14 eine Annäherungskenngröße des Werkzeugfunktionsmoduls 14 an das zumindest eine Werkzeugzubehörgerät 16 und/oder die zumindest eine Werkzeugmaschine 12 erfasst wird. Bei einem Betrieb des Werkzeugfunktionsmoduls 14 wird zumindest eine Annäherungskenngröße dauerhaft gemessen. Eine Annäherung des Werkzeugfunktionsmoduls 14 an zumindest ein Werkzeugzubehörgerät 16 und/oder zumindest eine Werkzeugmaschine 12 bewirkt eine Veränderung des Messwerts der Annäherungskenngröße.

Das Verfahren umfasst zumindest einen Verfahrensschritt 44, in dem der aktuelle Messwert der Erfassungskenngröße kontinuierlich an eine Recheneinheit 34 gesendet wird.

Das Verfahren umfasst zumindest einen Verfahrensschritt 32, in dem die zumindest eine erfasste Annäherungskenngröße mittels einer Recheneinheit 34 ausgewertet wird und zu einer Zuordnung der Masterfunktion und/oder der Slavefunktion ausgewertet wird. Die erfasste Annäherungskenngröße wird in der Recheneinheit 34 mit einem voreingestellten Grenzwert verglichen. Der Grenzwert ist in der Recheneinheit 34 gespeichert. Der Grenzwert kann, abhängig von der erfassten Annäherungskenngröße ein oberer Grenzwert oder ein unterer Grenzwert sein. Je nach gewählter Annäherungskenngröße indiziert eine Über- oder eine Unterschreitung des Grenzwerts eine Annäherung. Bei einer, insbesondere als eine Annäherung identifizierter, Über- oder Unterschreitung des Grenzwerts wird eine Verbindung des Werkzeugfunktionsmoduls 14 mit der Werkzeugmaschine 12 und/oder dem Werkzeugzubehörgerät 16 mittels der drahtlosen Kommunikationseinheiten 18, insbesondere automatisch, aufgebaut. Die Verbindung wird zu einer Zuordnung der Master und/oder der Slavefunktion verwendet. Bei einer Annäherung an mehrere Werkzeugmaschinen 12 und/oder Werkzeugzubehörgeräte 16 wird eine Zuordnung der Master- und Slavefunktion anhand einer vorgegebenen Reihenfolge bestimmt. Beispielsweise wird das zuerst angenäherte Gerät für eine Masterfunktion vorgemerkt und jedes weitere angenäherte Gerät wird für eine Slavefunktion vorgemerkt.

Das Verfahren umfasst zumindest einen Verfahrensschritt 46, in dem mittels der Auswertung der erfassten Annäherungskenngröße durch die Recheneinheit 34 eine Zuordnung des Werkzeugfunktionsmoduls 14 zu einer Werkzeugmaschine 12 und/oder einem Werkzeugzubehörgerät 16 vorgenommen wird. Eine derartige Zuordnung kann beispielsweise durch ein dauerhaftes, eine Annäherung indizierendes Über- und/oder Unterschreiten des Grenzwerts der Annäherungskenngröße bewerkstelligt werden. Durch eine derartige Zuordnung wird ein Netzwerkstatus, insbesondere eine Masterfunktion und/oder eine Slavefunktion, des Werkzeugfunktionsmoduls 14 auf das zugeordnete Gerät ausgeweitet und/oder übertragen. Wenn beispielsweise dem Werkzeugfunktionsmodul 14 eine Masterfunktion zugewiesen ist übernimmt bei einer Zuordnung des Werkzeugfunktionsmoduls 14 zu einer Werkzeugmaschine 12 diese Werkzeugmaschine 12 die zugewiesene Masterfunktion.

Das Verfahren umfasst zumindest einen Verfahrensschritt 20, in dem in Abhängigkeit von einer Übertragung von elektronischen Daten mittels der drahtlosen Kommunikationseinheit 18, dem Werkzeugfunktionsmodul 14 eine Masterfunktion zugeordnet wird. Zugleich wird dem zumindest einen, verbundenen Werkzeugzubehörgerät 16 in dem Verfahrensschritt 20 eine Slavefunktion zugeordnet. Die Slavefunktion ist der Masterfunktion untergeordnet. Ein Werkzeugzubehörgerät 16 mit einer Slavefunktion empfängt Vorgaben über die drahtlose Kommunikationseinheit 18 mit dem Ziel diese auszuführen. Ein Werkzeugfunktionsmodul 14 mit einer Masterfunktion versendet, insbesondere bei einem Betrieb der Werkzeugmaschine 12, über die drahtlose Kommunikationseinheit 18 Befehle an zumindest ein Werkzeugzubehörgerät 16.

Das Verfahren umfasst zumindest einen Verfahrensschritt 22, in dem mittels zumindest der Erfassungseinheit 24 des Werkzeugfunktionsmoduls 14 zumindest eine Betriebskenngröße, insbesondere zumindest eine Betriebskenngröße einer Werkzeugmaschine 12, an der das Werkzeugfunktionsmodul 14 angeordnet ist, erfasst wird und infolge der Slavefunktion des zumindest einen Werkzeugzubehörgeräts 16, das zumindest einen Werkzeugzubehörgerät 16 in Abhängigkeit von der zumindest einen Betriebskenngröße angesteuert wird. Das Werkzeugfunktionsmodul 14, welchem die Masterfunktion zugewiesen ist erkennt mittels der Erfassungseinheit 24 zumindest eine Betriebskenngröße. Die Betriebskenngröße wird, insbesondere in der Recheneinheit 34, mit zumindest einer vorgegebenen Betriebskenngröße verglichen. Bei einer Übereinstimmung der Art und/oder des Werts der Betriebskenngröße mit der Vorgabe und/oder bei einer Über- oder Unterschreitung eines vorgegebenen Grenzwerts der Vorgabe wird ein Signal an jedes verbundene Gerät, insbesondere Werkzeugzubehörgerät 16, versandt. Das Signal ist dazu vorgesehen eine Reaktion, insbesondere eine Aktivierung eines Betriebs, zumindest eines verbundenen Geräts zu bewirken.

Das Verfahren umfasst zumindest einen Verfahrensschritt 26, in dem eine Zuordnung der Masterfunktion und/oder der Slavefunktion mittels der Benutzerschnittstelle 28 vorgenommen wird. Im, in Fig. 3 oder Fig. 4 gezeigten Ausführungsbeispiel ist die Benutzerschnittstelle 28 als einfacher Schalter ausgebildet. In diesem Ausführungsbeispiel wird in dem Verfahrensschritt 26 der Schalter an dem Werkzeugfunktionsmodul 14 betätigt, wodurch in dem Werkzeugfunktionsmodul 14 ein Wartezustand aktiviert wird. Bei einem anschließenden Betätigen des Schalters an der Werkzeugmaschine 12 oder des Schalters an dem Werkzeugzubehörgerät 16 innerhalb eines vorgegebenen Zeitraums wird eine Zuordnung zu einer Master- oder Slavefunktion vorgenommen. Eine Auswahl zwischen Masterfunktion und Slavefunktion kann beispielsweise durch eine Auswahl verschiedener Schalter oder einer bestimmten Schaltfolge, beispielsweise ein zweifaches Drücken des Schalters für Masterfunktion und ein einfaches Drücken des Schalters für Slavefunktion, vorgenommen werden. Alternativ verfügt das Werkzeugfunktionsmodul 14 und/oder die Werkzeugmaschine 12 und/oder das Werkzeugzubehörgerät 16 und/oder ein weiteres externes Gerät, welches mit zumindest einem der Vorgenannten drahtlos verbunden ist über eine Anzeige, beispielsweise einen Touchscreen, welcher als Benutzerschnittstelle 28 dient.

Das Verfahren umfasst zumindest einen Verfahrensschritt 36, in dem mittels der zumindest einen Erfassungseinheit 24 des Werkzeugfunktionsmoduls 14 zumindest eine Lage und/oder zumindest eine Orientierung des Werkzeugfunktionsmoduls 14, insbesondere in einem an einer Werkzeugmaschine 12 angeordneten Zustand des Werkzeugfunktionsmoduls 14, erfasst wird. Die Lage wird von der Erfassungseinheit 24 als zumindest zweidimensionale, bevorzugt dreidimensionale Lage des Werkzeugfunktionsmoduls 14 im Raum registriert. Jede Bewegung in eine Raumrichtung wird dabei ebenfalls durch die Erfassungseinheit 24 registriert. Die Orientierung des Werkzeugfunktionsmoduls 14 wird von der Erfassungseinheit 24 als Ausrichtung relativ zur ebenen Erdoberfläche registriert. Jede Ausrichtungsänderung wird dabei ebenfalls durch die Erfassungseinheit 24 registriert.

Das Verfahren umfasst zumindest einen Verfahrensschritt 38, in dem die erfasste Lage und/oder Orientierung des Werkzeugfunktionsmoduls 14 mittels zumindest einer Recheneinheit 34 zu einer Steuerung und/oder Regelung von zumindest einer Funktion des zumindest einen Werkzeugzubehörgeräts 16, dem eine Slavefunktion zugewiesen ist, ausgewertet wird. Die Recheneinheit 34 verarbeitet die Lage- und/oder Orientierungsdaten und sendet in deren Abhängigkeit mittels einer Kommunikationseinheit 18 Steuer- und/oder Regelsignale an das Werkzeugzubehörgerät 16. Das Werkzeugzubehörgerät 16 empfängt mittels der Kommunikationseinheit 18 Signale und führt je nach Signalinhalt eine Regelung und/oder eine Aktivierung und/oder eine Deaktivierung und/oder eine Steuerung zumindest eines Betriebsparameters durch.

Das Verfahren umfasst zumindest einen Verfahrensschritt 50, in dem eine von der Betriebskenngröße verschiedene Kenngröße erfasst wird. Die von der Betriebskenngröße verschiedene Kenngröße wird entweder von der Erfassungseinheit 24 erfasst oder von einer externen Erfassungseinheit, welche die Kenngröße an das Werkzeugfunktionsmodul 14 überträgt.

Das Verfahren umfasst zumindest einen Verfahrensschritt 40, in dem eine in Abhängigkeit von zumindest einer erfassten Betriebskenngröße aktivierte Funktion des zumindest einen Werkzeugzubehörgeräts 16, dem eine Slavefunktion zugewiesen ist, in Abhängigkeit von einer erfassten Kenngröße, die verschieden ist von der Betriebskenngröße, angepasst wird. Die erfasste, von der Betriebskenngröße verschiedene Kenngröße wird in der Recheneinheit 34 ausgewertet. Abhängig von, insbesondere einstellbaren, Kriterien, welche beispielsweise eine Umweltkenngröße und/oder eine visuelle Mustererkennung umfassen können, wird von der Recheneinheit 34 ein Signal ausgesandt, welches mittels der Kommunikationseinheiten 18 zu zumindest einem verbundenen Werkzeugzubehörgerät 16 übertragen wird. In Abhängigkeit von dem Signal wird die Funktion und/oder eine Betriebskenngröße des Werkzeugzubehörgeräts 16 angepasst. Bei einer Anpassung wird das Werkzeugzubehörgerät 16 aktiviert oder deaktiviert und/oder zumindest eine Betriebskenngröße des Werkzeugzubehörgeräts 16 vergrößert oder verkleinert.

Das Verfahren zum Betrieb eines Systems 10 umfasst zumindest einen, vorzugsweise eine Mehrzahl oder bevorzugt alle der vorgenannten Verfahrensschritte 20, 22, 26, 30, 32, 36, 38, 40, 44, 46, 48, 50. Eine Reihenfolge der Verfahrensschritte 20, 22, 26, 30, 32, 36, 38, 40, 44, 46, 48, 50 kann dabei von einem Fachmann in einer beliebigen ihm sinnvoll erscheinenden Weise angeordnet werden. Insbesondere soll eine obige Reihenfolge der Aufzählung der Verfahrensschritte 20, 22, 26, 30, 32, 36, 38, 40, 44, 46, 48, 50 und/oder eine Reihenfolge von Verfahrensschritten 20, 22, 26, 30, 32, 36, 38, 40, 44, 46, 48, 50 mit aufsteigender Nummerierung nicht als Indiz für eine vorgesehene Abfolge verstanden werden.

## Patentansprüche

1. Verfahren zu einem Betrieb eines Systems (10), welches zumindest eine Werkzeugmaschine (12), die durch eine relative Bewegung zwischen einem Werkstück und einem Werkzeug eine vorgegebene Form am Werkstück oder eine Veränderung einer vorgegebenen Form an dem Werkstück erzeugt, zumindest ein Werkzeugzubehörgerät (16), das im Zusammenhang mit dem Betrieb der Werkzeugmaschine (12) eine Funktion zur positiven Beeinflussung eines mit der Werkzeugmaschine (12) durchgeführten Arbeitsvorgangs am Werkstück bewirkt, zumindest ein, insbesondere abnehmbar an der Werkzeugmaschine (12) anordenbares, Werkzeugfunktionsmodul (14) und zumindest eine Benutzerschnittstelle (28) umfasst, wobei das Werkzeugfunktionsmodul (14) und das Werkzeugzubehörgerät (16) jeweils zumindest eine drahtlose Kommunikationseinheit (18) umfassen, **dadurch gekennzeichnet, dass** in einem Verfahrensschritt (20) in Abhängigkeit von einer Übertragung von elektronischen Daten mittels der drahtlosen Kommunikationseinheiten (18) dem Werkzeugfunktionsmodul (14) eine Masterfunktion und dem zumindest einen Werkzeugzubehörgerät (16) eine der Masterfunktion untergeordnete Slavefunktion zum Ausführung von Vorgaben und/oder Aufgaben und/oder Befehlen der Masterfunktion zugeordnet wird, wobei in einem Verfahrensschritt (26) eine Zuordnung der Masterfunktion und/oder der Slavefunktion mittels der Benutzerschnittstelle (28) vorgenommen wird.

2. Verfahren nach Anspruch 1, **dadurch gekennzeichnet, dass** in einem Verfahrensschritt (22) mittels zumindest einer Erfassungseinheit (24) des Werkzeugfunktionsmoduls (14) zumindest eine Betriebskenngröße, insbesondere zumindest eine Betriebskenngröße einer Werkzeugmaschine (12), an der das Werkzeugfunktionsmodul (14) angeordnet ist, erfasst wird und infolge der Slavefunktion des zumindest einen Werkzeugzubehörgeräts (16) das zumindest einen Werkzeugzubehörgerät (16) in Abhängigkeit von der zumindest einen Betriebskenngröße angesteuert wird.

3. Verfahren nach Anspruch 1 oder 2, **dadurch gekennzeichnet, dass** in einem Verfahrensschritt (30) mittels zumindest einer Erfassungseinheit (24) des Werkzeugfunktionsmoduls (14) eine Annäherungskenngröße des Werkzeugfunktionsmoduls (14) an das zumindest eine Werkzeugzubehörgerät (16) und/oder die zumindest eine Werkzeugmaschine (12) erfasst wird.

4. Verfahren nach Anspruch 3, **dadurch gekennzeichnet, dass** in einem Verfahrensschritt (32) die zumindest eine erfasste Annäherungskenngröße mittels einer Recheneinheit (34) ausgewertet wird und zu einer Zuordnung der Masterfunktion und/oder der Slavefunktion ausgewertet wird.

5. Verfahren nach einem der vorhergehenden Ansprüche, **dadurch gekennzeichnet, dass** in einem Verfahrensschritt (36) mittels zumindest einer Erfassungseinheit (24) des Werkzeugfunktionsmoduls (14) zumindest eine Lage und/oder zumindest eine Orientierung des Werkzeugfunktionsmoduls (14), insbesondere in einem an einer Werkzeugmaschine (12) angeordneten Zustand des Werkzeugfunktionsmoduls (14), erfasst wird.

6. Verfahren nach Anspruch 5, **dadurch gekennzeichnet, dass** in einem Verfahrensschritt (38) die erfasste Lage und/oder Orientierung des Werkzeugfunktionsmoduls (14) mittels zumindest einer Recheneinheit (34) zu einer Steuerung und/oder Regelung von zumindest einer Funktion des zumindest einen Werkzeugzubehörgeräts (16), dem eine Slavefunktion zugewiesen ist, ausgewertet wird.

7. Verfahren nach einem der vorhergehenden Ansprüche, **dadurch gekennzeichnet, dass** in einem Verfahrensschritt (40) eine in Abhängigkeit von zumindest einer erfassten Betriebskenngröße aktivierte Funktion des zumindest einen Werkzeugzubehörgeräts (16), dem eine Slavefunktion zugewiesen ist, in Abhängigkeit von einer erfassten Kenngröße, die verschieden ist von der Betriebskenngröße, angepasst wird.

8. System (10) zur Durchführung des Verfahrens nach einem der vorhergehenden Ansprüche.

9. System (10) nach Anspruch 8, **dadurch gekennzeichnet, dass** das Werkzeugfunktionsmodul (14) zumindest eine Erfassungseinheit (24) mit einem Beschleunigungssensor (42) umfasst.

## Claims

1. Method for operating a system (10) comprising at least one machine tool (12), which produces a predefined shape on a workpiece or a change in a predefined shape on a workpiece by means of a relative movement between the workpiece and a tool, at least one tool accessory device (16), which, in connection with the operation of the machine tool (12), brings about a function for positively influencing a work process performed on the workpiece using the machine tool (12), at least one tool functional module (14), which can be arranged on the machine tool (12), in particular removably, and at least one user interface (28), wherein the tool functional module (14) and the tool accessory device (16) each comprise at least one wireless communication unit (18), **characterized in that** in one method step (20) a transmission of electronic data by means of the wireless communication units (18) is taken as a basis for assigning a master function to the tool functional module (14) and a slave function, which is subordinate to the master function, for implementing specifications and/or performing tasks and/or commands of the master function to the at least one tool accessory device (16), wherein in one method step (26) the master function and/or the slave function are assigned by means of the user interface (28).

2. Method according to Claim 1, **characterized in that** in one method step (22) at least one measuring unit (24) of the tool functional module (14) is used to measure at least one operating characteristic quantity, in particular at least one operating characteristic quantity of a machine tool (12) on which the tool functional module (14) is arranged, and, owing to the slave function of the at least one tool accessory device (16), the at least one tool accessory device (16) is actuated on the basis of the at least one operating characteristic quantity.

3. Method according to Claim 1 or 2, **characterized in that** in one method step (30) at least one measuring unit (24) of the tool functional module (14) is used to measure a convergence characteristic quantity of the tool functional module (14) in relation to the at least one tool accessory device (16) and/or the at least one machine tool (12).

4. Method according to Claim 3, **characterized in that** in one method step (32) the at least one measured convergence characteristic quantity is evaluated by means of a computing unit (34) and is evaluated to assign the master function and/or the slave function.

5. Method according to one of the preceding claims, **characterized in that** in one method step (36) at least one measuring unit (24) of the tool functional module (14) is used to measure at least one attitude and/or at least one orientation of the tool functional module (14), in particular in a state of the tool functional module (14) in which it is arranged on a machine tool (12) .

6. Method according to Claim 5, **characterized in that** in one method step (38) the measured attitude and/or orientation of the tool functional module (14) is evaluated by means of at least one computing unit (34) to control and/or automatically control at least one function of the at least one tool accessory device (16) to which a slave function is assigned.

7. Method according to one of the preceding claims, **characterized in that** in one method step (40) a function, activated on the basis of at least one measured operating characteristic quantity, of the at least one tool accessory device (16) to which a slave function is assigned is adapted on the basis of a measured characteristic quantity that is different from the operating characteristic quantity.

8. System (10) for performing the method according to one of the preceding claims.

9. System (10) according to Claim 8, **characterized in that** the tool functional module (14) comprises at least one measuring unit (24) having an acceleration sensor (42) .

## Revendications

1. Procédé de fonctionnement d'un système (10), qui comprend au moins une machine-outil (12) qui génère, par un mouvement relatif entre une pièce et un outil, une forme spécifiée sur la pièce ou une modification d'une forme spécifiée sur la pièce, au moins un accessoire d'outil (16) qui génère sur la pièce, en liaison avec le fonctionnement de la machine-outil (12), une fonction permettant d'influer positivement sur un processus de travail effectué avec la machine-outil (12), au moins un module de fonction d'outil (14) qui peut notamment être disposé de manière amovible sur la machine-outil (12) et au moins une interface utilisateur (28), le module de fonction d'outil (14) et l'accessoire d'outil (16) comprenant chacun au moins une unité de communication sans fil (18), **caractérisé en ce que**, dans une étape de procédé (20), le module de fonction d'outil (14) est associé à une fonction maître et l'au moins un accessoire d'outil (16) est associé à une fonction esclave subordonnée à la fonction maître pour exécuter des directives et/ou des tâches et/ou des instructions de la fonction maître en fonction d'une transmission de données électroniques au moyen des unités de communication (18), la fonction maître et/ou la fonction esclave étant associées dans une étape de procédé (26) au moyen de l'interface utilisateur (28).

2. Procédé selon la revendication 1, **caractérisé en ce que**, dans une étape de procédé (22), au moins un paramètre de fonctionnement, en particulier au moins un paramètre de fonctionnement paramètre d'une machine-outil (12) sur laquelle le module de fonction d'outil (14) est disposé, est détecté au moyen d'au moins une unité de détection (24) du module de fonction d'outil (14) et, suite à la fonction esclave de l'au moins un accessoire d'outil (16), l'au moins un accessoire d'outil (16) est commandé en fonction de l'au moins un paramètre de fonctionnement.

3. Procédé selon la revendication 1 ou 2, **caractérisé en ce que**, dans une étape de procédé (30), un paramètre d'approche du module de fonction d'outil (14) par rapport à l'au moins un accessoire d'outil (16) et/ou l'au moins une machine-outil (12) est détecté au moyen d'au moins une unité de détection (24) du module de fonction d'outil (14).

4. Procédé selon la revendication 3, **caractérisé en ce que**, dans une étape de procédé (32), l'au moins un paramètre d'approche détecté est évalué au moyen d'une unité de calcul (34) et est évalué pour associer la fonction maître et/ou la fonction esclave.

5. Procédé selon l'une des revendications précédentes, **caractérisé en ce que**, dans une étape de procédé (36), au moins une position et/ou au moins une orientation du module de fonction d'outil (14), en particulier dans un état dans lequel le module de fonction d'outil (14) est disposé sur une machine-outil (12), est détectée au moyen d'au moins une unité de détection (24) du module de fonction d'outil (14).

6. Procédé selon la revendication 5, **caractérisé en ce que**, dans une étape de procédé (38), la position et/ou l'orientation détectée du module de fonction d'outil (14) est évaluée au moyen d'au moins une unité de calcul (34) pour commander et/ou réguler au moins une fonction de l'au moins un accessoire d'outil (16) auquel est affectée une fonction esclave.

7. Procédé selon l'une des revendications précédentes, **caractérisé en ce que**, dans une étape de procédé (40), une fonction, activée en fonction d'au moins un paramètre de fonctionnement détecté, de l'au moins un accessoire d'outil (16) auquel est affectée une fonction esclave, est adaptée en fonction d'un paramètre détecté qui est différent du paramètre de fonctionnement.

8. Système (10) destiné à mettre en œuvre le procédé selon l'une des revendications précédentes.

9. Système (10) selon la revendication 8, **caractérisé en ce que** le module de fonction d'outil (14) comprend au moins une unité de détection (24) pourvue d'un capteur d'accélération (42).
